# EUROPÄISCHE PATENTSCHRIFT

(11) **EP 1 169 203 B1**
(45) Veröffentlichungstag und Bekanntmachung des Hinweises auf die Patenterteilung: **09.07.2003**
(21) Anmeldenummer: 00926801.2
(22) Anmeldetag: 04.04.2000
(51) Int. Cl.: B60T 13/52

(54) **PNEUMATISCHER BREMSKRAFTVERSTÄRKER MIT VERÄNDERLICHEM KRAFTÜBERSETZUNGSVERHÄLTNIS**
PNEUMATIC BRAKE BOOSTER WITH VARIABLE FORCE TRANSMISSION RATIO
SERVOFREIN PNEUMATIQUE A RAPPORT DE TRANSMISSION DE FORCE VARIABLE

(30) Priorität: 13.04.1999 DE 19916579
(43) Veröffentlichungstag der Anmeldung: 09.01.2002
(73) Patentinhaber: LUCAS INDUSTRIES public limited company, Solihull, West Midlands B90 4LA (GB)
(72) Erfinder: HANNUS, Thomas, D-56727 Mayen (DE); PUSCHER, Gerd, D-56626 Andernach (DE)
(74) Vertreter: Beyer, Andreas, Dr.
(86) Internationale Anmeldenummer: EP0002974
(87) Internationale Veröffentlichungsnummer: WO00061415

(56) Entgegenhaltungen:
- EP-A- 0 901 950
- DE-A- 19 750 514
- DE-C- 4 234 041

## Beschreibung

Die Erfindung betrifft einen pneumatischen Bremskraftverstärker gemäß dem Oberbegriff des Patentanspruchs 1. Ein solcher, als Unterdruckbremskraftverstärker für ein Kraftfahrzeug ausgebildeter Bremskraftverstärker ist aus der WO 95/01272 bekannt.

Normalerweise haben pneumatische Bremskraftverstärker ein festes Kraftübersetzungsverhältnis, d.h. eine mittels des Eingangsgliedes in den Bremskraftverstärker eingeleitete Betätigungskraft wird von einer dem Eingangsglied zugeordneten, kleineren Fläche auf eine dem Kraftabgabeglied zugeordneten, größere Fläche übertragen, zumeist unter Zwischenschaltung einer sich flüssigkeitsähnlich verhaltenden, sogenannten Reaktionsscheibe aus Elastomermaterial. Unter bestimmten Umständen, beispielsweise in einer Notbremssituation, ist es jedoch erwünscht, einem Benutzer eine möglichst hohe Bremskraftunterstützung zur Verfügung zu stellen, damit ausgehend von einer bestimmten Eingangskraft ein möglichst hoher Bremsdruck erzeugt werden kann.

In der genannten WO 95/01272 ist deshalb vorgeschlagen, die auf die Reaktionsscheibe wirkende und dem Eingangsglied zugeordnete kleinere Fläche nach Überschreiten einer bestimmten Eingangskraft weiter zu verkleinern. Diese verkleinerte Fläche dringt, verglichen mit der nicht verkleinerten Fläche, bei gleicher Eingangs- oder Betätigungskraft weiter in die elastische Reaktionsscheibe ein, so daß das Steuerventil des Bremskraftverstärkers entsprechend weiter öffnet, woraus ein entsprechend höherer Differenzdruck im Bremskraftverstärker und damit eine erhöhte Kraftverstärkung resultiert. Die in der WO 95/01272 vorgeschlagenen Lösungen sind jedoch relativ kompliziert aufgebaut und erschweren überdies die Montage des Bremskraftverstärkers beträchtlich.

Der Erfindung liegt daher die Aufgabe zugrunde, einen pneumatischen Bremskraftverstärker mit einer Einrichtung zur Änderung des Kraftübersetzungsverhältnisses in Abhängigkeit der auf das Krafteingangsglied ausgeübten Kraft bereitzustellen, die möglichst einfach aufgebaut und vor allem einfach montierbar sein soll.

Ausgehend von einem Bremskraftverstärker der genannten Art ist diese Aufgabe erfindungsgemäß dadurch gelöst, daß die Einrichtung zur Änderung des Kraftübersetzungsverhältnisses als vormontierbare Einheit in Gestalt einer Patrone ausgeführt ist, die nach erfolgter Vormontage in das Steuerventil einsetzbar ist. Die Patrone weist einen Stößel, dessen der Reaktionsscheibe zugewandtes Ende mit einem Kolben verbunden ist, einen hohlzylindrischen Schaltkolben, der den zuvor genannten Kolben umgibt und der relativ zu dem Kolben verschiebbar ist, einen am Stößel vorhandenen Anschlag, der eine Ausgangsstellung für den Schaltkolben festlegt, in welcher die der Reaktionsscheibe zugewandten Flächen des Schaltkolbens und des Kolbens eine gemeinsame, bündige Fläche bilden, und eine Feder auf, die sich an dem Stößel abstützt und die den Schaltkolben gegen den Anschlag vorspannt. Auf diese Weise ist eine kompakte, leicht vormontierbare Einheit geschaffen, die nach erfolgter Vormontage nur noch in eine entsprechende Ausnehmung des Steuerventils eingeschoben zu werden braucht. Tiefergehende Änderungen des konstruktiven Aufbaus des Bremskraftverstärkers bzw. des Steuerventils sind nicht erforderlich, vielmehr läßt sich die erfindungsgemäß verwendete Patrone in viele bestehende Bremskraftverstärkerkonstruktionen ohne großen Aufwand integrieren. Es besteht damit die Möglichkeit, ein und dieselbe Bremskraftverstärkerkonstruktion mit oder ohne veränderlicher Kraftübersetzung anbieten zu können.

Vorzugsweise ist der Schaltkolben auf einem Schaft des Stößels gleitend verschiebbar geführt. Eine solche Ausbildung erspart eine separate Führung des Schaltkolbens und ergibt eine kompakte Bauweise.

Zur weiteren Vereinfachung des konstruktiven Aufbaus und zur Verkleinerung der Einrichtung zur Änderung des Übersetzungsverhältnisses ist bei bevorzugten Ausführungsformen des erfindungsgemäßen Bremskraftverstärkers der Stößelschaft an seinem dem Krafteingangsglied zugewandten Ende mit einem Teller verbunden, an dem sich die den Schaltkolben gegen den Anschlag vorspannende Feder abstützt. Vorteilhaft ist dabei der Außendurchmesser des Schaltkolbens größer als der Außendurchmesser des Tellers gewählt, so daß sich der Schaltkolben bei größeren Eingangskräften an einer Stufe abstützen kann, die in der Ausnehmung vorhanden ist, die im Steuerventilgehäuse zur Aufnahme der Patrone vorgesehen ist. Der Teller kann einstückig mit dem Stößelschaft ausgebildet sein.

Der die Ausgangsstellung des Schaltkolbens festlegende Anschlag ist vorzugsweise durch einen Sicherungsring (Sprengring) gebildet, der in einer Nut des Stößelschaftes gehalten ist. Eine solche Ausbildung ist kostengünstig und einfach montierbar.

Die den Schaltkolben in seine Ausgangsstellung vorspannende Feder kann eine lineare Federkennlinie haben. Ebenso kann diese Feder jedoch eine progressiv ansteigende Federkennlinie aufweisen, wodurch die Bremskraftunterstützung des erfindungsgemäßen Bremskraftverstärkers sich beginnend mit der Bewegung des Schaltkolbens aus seiner Ausgangsstellung bis zum Erreichen einer Endstellung des Schaltkolbens progressiv erhöht. Die Endstellung des Schaltkolbens kann beispielsweise durch die schon erwähnte Schulter in der Ausnehmung des steuerventilgehäuses festgelegt sein, die zur Aufnahme der Patrone dient.

Der Kolben, der mit dem der Reaktionsscheibe zugewandten Ende des Stößels verbunden ist, weist vorzugsweise eine zumindest annähernd kugelsegmentförmige Erhebung auf seiner der Reaktionsscheibe zugewandten Fläche auf. Mittels einer solchen Erhebung wird ein bestimmtes, sogenanntes "Einsprungverhalten" des Bremskraftverstärkers realisiert. Genauer gesagt dringt die kugelsegmentförmige Erhebung zu Beginn einer Betätigung des Bremskraftverstärkers bei vorgegebener Kraft tiefer in die Reaktionsscheibe ein, so daß das Steuerventil sich in der Anfangsphase einer Bremsbetätigung etwas weiter öffnen kann und der Bremskraftverstärker somit relativ schnell eine bestimmte Bremskraftunterstützung bereitstellt.

Ein Ausführungsbeispiel eines erfindungsgemäßen Bremskraftverstärkers wird im folgenden anhand der beigefügten, schematischen Figuren näher erläutert. Es zeigt:
- Fig. 1: einen erfindungsgemäßen Bremskraftverstärker mit einer Einrichtung zur Änderung des Kraftübersetzungsverhältnisses zwischen Krafteingangsglied und Kraftabgabeglied im Längsschnitt,
- Fig. 2: eine die Einrichtung zur Änderung des Kraftübersetzungsverhältnisses vergrößert wiedergebenden Ausschnitt aus Fig. 1, wobei die Einrichtung in einem Zustand dargestellt ist, wie er sich bei unbetätigtem Bremskraftverstärker einstellt,
- Fig. 3: den Ausschnitt gemäß Fig. 2 mit der Einrichtung in einer Stellung, wie sie sich bei normaler Betätigung des Bremskraftverstärkers ergibt,
- Fig. 4: den Ausschnitt gemäß Fig. 2 mit der Einrichtung in einer Stellung, in der aufgrund einer erhöhten Betätigungskraft bereits eine gewisse Relativverschiebung zweier Kolben der Einrichtung stattgefunden hat,
- Fig. 5: den Ausschnitt gemäß Fig. 2 mit der Einrichtung in einer Stellung, in der ein äußerer Kolben der Einrichtung an einem gehäusefesten Anschlag anliegt,
- Fig. 6: den Ausschnitt gemäß Fig. 2 mit der Einrichtung in einer Stellung, die sie bei gegenüber der Fig. 5 weiter erhöhter Betätigungskraft einnimmt, und
- Fig. 7: ein Diagramm, das das sich in Abhängigkeit der Eingangskraft ändernde Übersetzungsverhältnis des erfindungsgemäßen Bremskraftverstärkers wiedergibt.

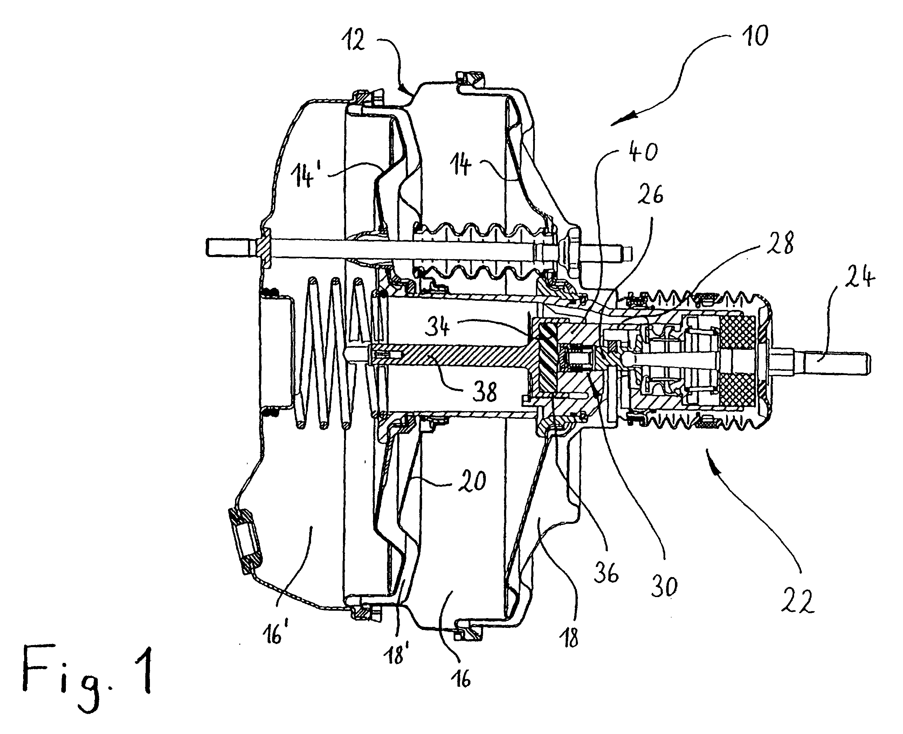

Fig. 1 zeigt im Längsschnitt einen typischen Unterdruckbremskraftverstärker 10 mit einem Gehäuse 12, das durch eine beweglich Wand 14 in eine Unterdruckkammer 16 und eine Arbeitskammer 18 unterteilt ist. Der hier dargestellte Bremskraftverstärker 10 ist in Tandembauweise ausgeführt, d.h. er weist eine zusätzliche bewegliche Wand 14' auf, die einen durch eine feststehende Wand 20 abgetrennten Teil des Gehäuses 12 in eine weitere Unterdruckkammer 16' und eine weitere Arbeitskammer 18' unterteilt.

Während die Unterdruckkammern 16 und 16' im Betrieb des Bremskraftverstärkers 10 ständig mit einer Unterdruckquelle in Verbindung stehen, können die Arbeitskammern 18, 18' wahlweise entweder mit Unterdruck oder mit Atmosphärendruck in Verbindung gebracht werden. Hierzu dient ein Steuerventil 22, das in Abhängigkeit der Betätigung eines Krafteingangsgliedes 24, welches üblicherweise mit einem hier nicht dargestellten Bremspedal verbunden ist, im Steuerventil 22 vorhandene Ventilsitze so steuert, daß Atmosphärendruck in die Arbeitskammern 18, 18' einströmen kann, oder daß - bei Beendigung einer Betätigung des Bremskraftverstärkers 10 - die Unterdruckkammern 16, 16' in Verbindung mit den Arbeitskammern 18, 18' gebracht werden, um letztere wieder zu evakuieren. Der Aufbau und die Funktion eines solchen Bremskraftverstärkers 10 sind Fachleuten auf diesem Gebiet gut bekannt und es werden deshalb im folgenden nur diejenigen Teile und deren Funktion näher beschrieben, die für die vorliegende Erfindung von Interesse sind.

Das bereits erwähnte Krafteingangsglied 24 ist mit einem Ventilkolben 26 verbunden, der in einem Gehäuse 28 des Steuerventils 22 axial verschieblich aufgenommen ist. Auf der dem Krafteingangsglied 24 axial gegenüberliegenden Seite des Ventilkolbens 26 schließt sich eine im folgenden noch näher erläuterte Einrichtung zur Änderung des Kraftübersetzungsverhältnisses an, die als eine vormontierte Patrone 30 bezogen auf die Figuren von links her in eine gestufte Ausnehmung 32 des Steuerventilgehäuses 28 eingesetzt ist. An diese Patrone 30 schließt sich axial eine Reaktionsscheibe 34 an, die aus Elastomermaterial besteht und in einem becherförmig erweiterten Endabschnitt 36 eines Kraftabgabegliedes 38 des Bremskraftverstärkers 10 aufgenommen ist. Das Kraftabgabeglied 38 ist mittels seines becherförmigen Endabschnittes 36 auf einem nabenförmigen Endabschnitt 40 des Steuerventilgehäuses 28 geführt.

Bei einer Betätigung des Bremskraftverstärkers 10 bewirkt eine auf das Krafteingangsglied 24 ausgeübte Betätigungskraft eine Verschiebung desselben nach links, d.h. in den Bremskraftverstärker 10 hinein. Diese Verschiebung wird auf den mit dem Krafteingangsglied 24 gekoppelten Ventilkolben 26 übertragen und führt zur Öffnung desjenigen Ventilsitzes, der Atmosphärendruck in die Arbeitskammern 18, 18' einströmen läßt. Der Ventilkolben 26 überträgt die genannte Verschiebung mittels der Patrone 30 auf die Reaktionsscheibe 34, deren Verhalten sich idealisiert mit dem Verhalten einer hydraulischen Flüssigkeit vergleichen läßt. Das bedeutet, daß die auf das Krafteingangsglied 24 ausgeübte Kraft von der kleineren Querschnittsfläche der Patrone 30 mittels der Reaktionsscheibe 34 auf die vom Innendurchmesser des becherförmigen Endabschnittes 36 definierte größere Querschnittsfläche des Kraftabgabegliedes 38 übertragen wird. Das Verhältnis der kleineren Querschnittsfläche der Patrone 30 zur größeren Querschnittsfläche der Reaktionsscheibe 34 stellt das Kraftübersetzungsverhältnis des Bremskraftverstärkers 10 dar.

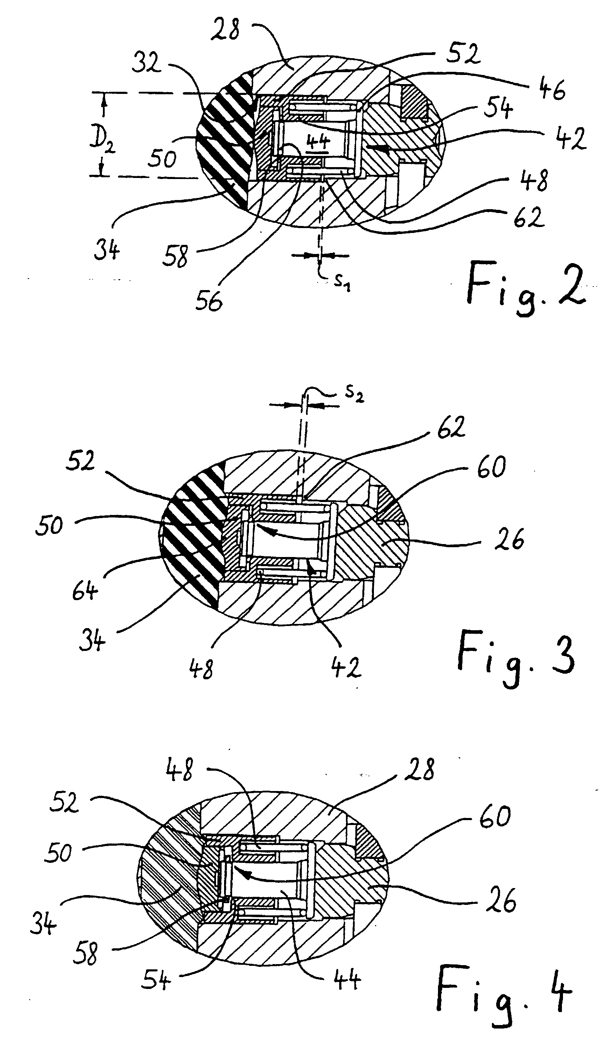

Die Patrone 30 stellt eine Einrichtung zur Änderung dieses Kraftübersetzungsverhältnisses dar, die unter Bezugnahme auf die Figuren 2 bis 6 nun näher beschrieben wird. Sie umfaßt einen Stößel 42 mit einem Schaft 44, dessen krafteingangsgliedseitiges Ende mit einem Teller 46 im dargestellten Ausführungsbeispiel einstückig verbunden ist. Der Teller 46 dient zum einen der Kraftübertragung von dem Ventilkolben 26 auf die Patrone 30 und zum anderen zur Abstützung einer koaxial zum Stößelschaft 44 angeordneten und ihn umgebenden Druckfeder 48.

Am anderen Ende des Stößelschaftes 44 ist ein hier plattenförmiger, kreisrunder Kolben 50 eines Durchmesser D₁ befestigt, der einen Teil der auf die Reaktionsscheibe 34 wirkenden Querschnittsfläche der Patrone 30 bildet. Koaxial zu diesem Kolben 50 ist ein hohlzylindrischer Schaltkolben 52 angeordnet, der mittels eines Kragens 54 gleitend verschiebbar auf dem Stößelschaft 44 geführt ist und dessen Innendurchmesser im Bereich des Kolbens 50 bis auf übliche Toleranzen dem Außendurchmesser D₁ des Kolbens 50 entspricht. Der Außendurchmesser D₂ des Schaltkolbens 52 ist größer als der Außendurchmesser des Tellers 46 und entspricht im wesentlichen dem größten Durchmesser der gestuften Ausnehmung 32 im Steuerventilgehäuse 28.

Auf einem dem Kolben 50 benachbarten Endabschnitt des Stößelschaftes 44 ist in einer Nut 56 ein Sicherungsring 58 gehalten, der nach dem Aufschieben des Schaltkolbens 52 auf den Stößelschaft 44 in der Nut 56 befestigt wird und der dann einen Anschlag 60 für den Schaltkolben 52 bildet. Die sich am Teller 46 abstützende Druckfeder 48 spannt den Kragen 54 des Schaltkolbens 52 gegen diesen Anschlag 60 vor.

In der durch den Anschlag 60 festgelegten Ausgangsstellung bilden die der Reaktionsscheibe 34 zugewandten Flächen des Kolbens 50 und des Schaltkolbens 52, wie aus Fig. 2 ersichtlich, eine einzige bündige Fläche. In dieser Ausgangsstellung besteht zwischen dem von der Reaktionsscheibe 34 abgewandten Ende des Schaltkolbens 52 und einer durch eine Durchmesserverkleinerung der Ausnehmung 32 gebildeten Ringschulter 62 ein axialer Abstand s₁.

Die Funktion der Patrone 30 in Abhängigkeit der mittels des Ventilkolbens 26 auf sie ausgeübten Kraft ist wie folgt:
Wird das nicht dargestellte, mit dem Krafteingangsglied 24 gekoppelte Bremspedal niedergedrückt, überträgt sich diese Bewegung von dem Krafteingangsglied 24 auf den Ventilkolben 26 und von diesem auf den Teller 46 der Patrone 30. Ausgehend von der in Fig. 2 wiedergegebenen Stellung verschiebt sich die gesamte Patrone 30 nach links, wobei zunächst eine auf dem Kolben 50 vorhandene, kugelsegmentförmige Erhebung 64 in die Reaktionsscheibe 34 eindringt. Aufgrund der zu Beginn sehr kleinen Kontaktfläche zwischen der Erhebung 64 und der Reaktionsscheibe 34 kann der Kolben 50 relativ schnell in die Reaktionsscheibe 34 eindringen, was in der Anfangsphase einer Betätigung zu einem schnellen Öffnen des Steuerventils 22 und damit zum schnellen Aufbau einer Bremskraftunterstützung führt. In dem Diagramm der Fig. 7, das den Bremsdruck in einem von dem Kraftabgabeglied 38 beaufschlagten, hier nicht dargestellten Hauptzylinder aufgetragen über der mittels des Krafteingangsgliedes 24 eingeleiteten Eingangskraft darstellt, ist dies an dem nach Überwindung eines Anfangsspieles (Punkt A) steilen Anstieg des Hauptzylinderdrucks zu erkennen (Strecke zwischen den Punkten A und B).

Eine weitere Verschiebung des Krafteingangsgliedes 24 führt jedoch nach kurzer Zeit zu einem vollflächigen Anliegen sowohl des Kolbens 50 als auch des Schaltkolbens 52 an der Reaktionsscheibe 34 (siehe Fig. 3). Die Patrone 30 ist dabei insgesamt nach links verschoben worden, was sich an dem nun größeren Abstand s₂ zwischen der Ringschulter 62 und dem inneren Ende des Schaltkolbens 52 zeigt. Der mittlerweile in dem nicht dargestellten Hauptzylinder aufgebaute und über das Kraftabgabeglied 38 zurückwirkende Bremsdruck führt dazu, das das Material der Reaktionsscheibe 34 etwas in die Ausnehmung 32 gepreßt wird. Die über die Reaktionsscheibe 34 auf den Schaltkolben 52 übertragene Rückwirkkraft reicht jedoch noch nicht dazu aus, die Druckfeder 48 zu komprimieren. In diesem Zustand (siehe in Fig. 7 die Strecke zwischen den Punkten B und C) ist daher das Kraftübersetzungsverhältnis des Bremskraftverstärkers 10 gegeben durch das Verhältnis des Durchmessers D₂ zum Innendurchmesser des die Reaktionsscheibe 34 aufnehmenden becherförmigen Endabschnittes 36.

Bei einer weiteren Erhöhung der mittels des Krafteingangsgliedes 24 aufgebrachten Eingangskraft wird der über den Stößel 42 starr mit dem Ventilkolben 26 verbundene Kolben 50 der Patrone 30 weiter nach links verschoben und damit tiefer in die Reaktionsscheibe 34 hinein gedrückt. Der entsprechend höhere, im Hauptzylinder erzielte Bremsdruck wirkt über die Reaktionsscheibe 34 auch auf den Schaltkolben 52 zurück und reicht nun dazu aus, die Druckfeder 48 zu komprimieren. Der Schaltkolben 52 löst sich infolge dessen von dem durch den Sicherungsring 58 gebildeten Anschlag 60 und der Abstand zwischen dem inneren Ende des Schaltkolbens 52 und der Ringschulter 62 verringert sich (siehe Fig. 4). Im Diagramm der Fig. 7 ist dies an dem zunehmend steiler werdenden Abschnitt zwischen den Punkten C und D der Kurve zu erkennen, der auf den zuvor erwähnten, flacheren Abschnitt zwischen den Punkten B und C folgt.

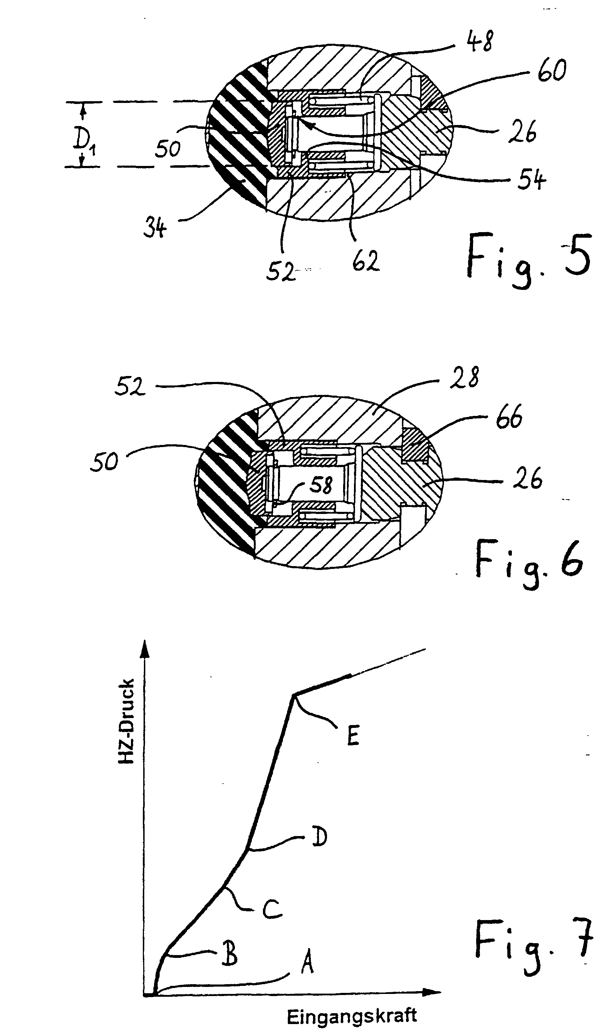

Bei weiter erhöhter Eingangskraft gerät schließlich das innere Ende des Schaltkolbens 52 in Kontakt mit der Ringschulter 62 (siehe Fig. 5), was zur "Erdung" des Schaltkolbens 52 führt, d.h. die mit der Reaktionsscheibe 34 in Kontakt stehende Fläche des Schaltkolbens 52 hat nun keinen Einfluß mehr auf das Kraftverstärkungsverhältnis des Bremskraftverstärkers 10. Wirksam ist jetzt nur noch die kleinere Fläche des Kolbens 50, so daß sich das Kraftverstärkungsverhältnis des Bremskraftverstärkers 10 nunmehr aus dem Verhältnis des Durchmessers D₁ des Kolbens 50 zum Innendurchmesser des becherförmigen Endabschnittes 36 ergibt. In Fig. 7 entspricht die in Fig. 5 wiedergegebene Stellung der Patrone 30 dem Punkt D.

Ausgehend von Fig. 5 dringt bei einer weiteren Erhöhung der Eingangskraft der Kolben 50 noch tiefer in die Reaktionsscheibe 34 ein (siehe Fig. 6), bis ein mit dem Ventilkolben 26 verbundener, sich in einer radialen Ausnehmung des Steuerventilgehäuses 28 erstreckender Riegel 66 gegen das Steuerventilgehäuse 28 stößt (siehe Fig. 6). Dies ist der sogenannte Aussteuerpunkt des Bremskraftverstärkers 10, der in Fig. 7 dem Punkt E entspricht. Eine weitere Erhöhung der Eingangskraft kann dann vom Bremskraftverstärker 10 nicht mehr verstärkt werden, und führt deshalb zu einem entsprechend geringeren Anstieg des Hauptzylinderdrucks.

Beim Lösen der Bremse werden die beschriebenen Stellungen der Patrone 30 in umgekehrter Richtung durchlaufen.

Aus der vorhergehenden Funktionsbeschreibung ist ersichtlich, daß die Steigung und der Verlauf der in Fig. 7 wiedergegebenen Kurve zwischen den Punkten C und D von der Charakteristik der Druckfeder 48 abhängt. Die Steigung des genannten Abschnittes der Kurve kann durch unterschiedliche Federsteifigkeiten beeinflußt werden, wobei solche unterschiedlichen Federsteifigkeiten sogar in ein und derselben Druckfeder 48 vorhanden sein können (progressive Federkennlinie), um den Verlauf des Kraftverstärkungsverhältnisses in dem genannten Kurvenabschnitt in einer gewünschten Weise zu beeinflussen.

## Patentansprüche

1. Pneumatischer Bremskraftverstärker (10), insbesondere für Kraftfahrzeuge, mit einem Steuerventil (22) zum Steuern einer pneumatischen Druckdifferenz, einem Krafteingangsglied (24) zur Betätigung des Steuerventils (22), einem Kraftabgabeglied (38) zur Weiterleitung der Bremskraft, einer zwischen dem Kraftabgabeglied (38) und dem Krafteingangsglied (24) angeordneten Reaktionsscheibe (34) aus Elastomermaterial, und einer zwischen der Reaktionsscheibe (34) und dem Krafteingangsglied (24) angeordneten, auf die Reaktionsscheibe (34) wirkenden Einrichtung zur Änderung des Kraftübersetzungsverhältnisses zwischen Krafteingangsglied (24) und Kraftabgabeglied (38) in Abhängigkeit der auf das Krafteingangsglied (24) ausgeübten Kraft,
**dadurch gekennzeichnet, daß** die Einrichtung zur Änderung des Kraftübersetzungsverhältnisses als vormontierbare Einheit in Gestalt einer Patrone (30) ausgeführt ist, die nach erfolgter Vormontage in das Steuerventil (22) einsetzbar ist, wobei die Patrone (30) aufweist:
- einen Stößel (42), dessen der Reaktionsscheibe (34) zugewandtes Ende mit einem Kolben (50) verbunden ist,
- einen hohlzylindrischen Schaltkolben (52), der den Kolben (50) umgibt und der relativ zu dem Kolben (50) verschiebbar ist,
- einen am Stößel (42) vorhandenen Anschlag (60), der eine Ausgangsstellung festlegt, in der die der Reaktionsscheibe (34) zugewandten Flächen des Schaltkolbens (52) und des Kolbens (50) eine gemeinsame, bündige Fläche bilden, und
- eine Feder (48), die sich an dem Stößel (42) abstützt und die den Schaltkolben (52) gegen den Anschlag (60) vorspannt.

2. Bremskraftverstärker nach Anspruch 1,
**dadurch gekennzeichnet, daß** der Schaltkolben (52) auf einem Schaft (44) des Stößels (42) gleitend verschiebbar geführt ist.

3. Bremskraftverstärker nach Anspruch 2,
**dadurch gekennzeichnet, daß** der Stößelschaft (44) an seinem dem Krafteingangsglied (24) zugewandten Ende mit einem Teller (46) verbunden ist, an dem sich die Feder (48) abstützt.

4. Bremskraftverstärker nach Anspruch 3,
**dadurch gekennzeichnet, daß** der Außendurchmesser des Schaltkolbens (52) größer als der Außendurchmesser des Tellers (46) ist.

5. Bremskraftverstärker nach einem der Ansprüche 2 bis 4,
**dadurch gekennzeichnet, daß** der Anschlag (60) durch einen in einer Nut des Stößelschaftes (44) gehaltenen Sicherungsring (58) gebildet ist.

6. Bremskraftverstärker nach einem der Ansprüche 1 bis 5,
**dadurch gekennzeichnet, daß** die Feder (48) eine progressiv ansteigende Federkennlinie hat.

7. Bremskraftverstärker nach einem der Ansprüche 1 bis 6,
**dadurch gekennzeichnet, daß** die der Reaktionsscheibe (34) zugewandte Fläche des Kolbens (50) eine zumindest annähernd kugelsegmentförmige Erhebung (64) aufweist.

## Claims

1. Pneumatic brake booster (10), in particular for motor vehicles, comprising a control valve (22) for controlling a pneumatic pressure difference, a force input element (24) for actuating the control valve (22), a force output element (38) for transmitting the braking force, a reaction disk (34) made of elascomeric material disposed between the force output elemenc (38) and the force input element (24), and a device, which is disposed between the reaction disk (34) and the force input element (24) and acts upon the reaction disk (34), for varying the force transmission ratio between force input element (24) and force output element (38) in dependence upon the force exerted on the force input element (24), **characterized in that** the device for varying the force transmission ratio is designed as a preassembly unit in the form of a cartridge (30), which after preassembly is insertable into the control valve (22), wherein the cartridge (30) comprises:
- a plunger (42), of which the end facing the reaction disk (34) is connected to a piston (50),
- a hollow-cylindrical operating piston (52), which surrounds the piston (50) and is displaceable relative to the piston (50),
- a stop (60), which is provided on the plunger (42) and defines an initial position, in which the areas of operating piston (52) and piston (50) facing the reaction disk (34) form a common, flush area, and
- a spring (48), which is supported against the plunger (42) and which biases the operating piston (52) towards the stop (60).

2. Brake booster according to claim 1,
**characterized in that** the operating piston (52) is guided in a slidingly displaceable manner on a stem (44) of the plunger (42).

3. Brake booster according to claim 2,
**characterized in that** the plunger stem (44) at its end facing the force input element (24) is connected to a plate (46), against which the spring (48) is supported.

4. Brake booster according to claim 3,
**characterized in that** the outside diameter of the operating piston (52) is greater than the outside diameter of the plate (46).

5. Brake booster according to one of claims 2 to 4,
**characterized in that** the stop (60) is formed by a retaining ring (58), which is held in a groove of the plunger stem (44).

6. Brake booster according to one of claims 1 to 5,
**characterized in that** the spring (48) has a progressively rising spring characteristic curve.

7. Brake booster according to one of claims 1 to 6,
**characterized in that** the area of the piston (50) facing the reaction disk (34) has an at least approximately spherical-segment-shaped protuberance (64).

## Revendications

1. Servofrein pneumatique (10), en particulier pour véhicules automobiles, comportant une soupape de commande (22) pour la commande d'une différence de pression pneumatique, un élément d'entrée de la force (24) pour l'actionnement de la soupape de commande (22), un élément de sortie de la force (38) pour la transmission de la force de freinage, un disque de réaction (34) en matière élastomère disposé entre l'élément de sortie de la force (38) et l'élément d'entrée de la force (24), et un dispositif, disposé entre le disque de réaction (34) et l'élément d'entrée de la force (24), agissant sur le disque de réaction (34), pour la modification du rapport de démultiplication de la force entre élément d'entrée de la force (24) et élément de sortie de la force (38) en fonction de la force exercée sur l'élément d'entrée de la force (24), **caractérisé en ce que** le dispositif pour la modification du rapport de démultiplication de la force est réalisé en tant qu'unité pouvant être montée préalablement, sous forme de cartouche (30) qui, après prémontage, est introduite dans la soupape de commande (22), la cartouche présentant :
- un poussoir (42) dont l'extrémité tournée vers le disque de réaction (34) est reliée avec un piston (50),
- un piston de commutation cylindrique creux (52), qui entoure le piston (50) et est mobile relativement au piston (50),
- une butée (60) présente sur le poussoir (42), qui définit une position de sortie dans laquelle les surfaces du piston de commutation (52) et du piston (50), tournées vers le disque de réaction (34), forment une surface commune plane, et
- un ressort (48) qui s'appuie sur le poussoir (42) et précontraint le piston de commutation (52) contre la butée (60).

2. Servofrein selon la revendication 1, **caractérisé en ce que** le piston de commutation (52) est guidé, de manière coulissante, sur un tige (44) du poussoir (42).

3. Servofrein selon la revendication 2,
**caractérisé en ce que** la tige du poussoir (44) est relié, à son extrémité tournée vers l'élément d'entrée de la force (24), avec un plateau (46) sur lequel s'appuie le ressort (48).

4. Servofrein selon la revendication 3,
**caractérisé en ce que** le diamètre extérieur du piston de commutation (52) est supérieur au diamètre extérieur du plateau (46).

5. Servofrein selon l'une des revendications 2 à 4, **caractérisé en ce que** la butée (60) est formée par un circlip (58) maintenu dans une rainure de la tige du poussoir (44).

6. Servofrein selon l'une des revendications 1 à 5, **caractérisé en ce que** le ressort (48) possède une courbe caractéristique élastique progressivement croissante.

7. Servofrein selon l'une des revendications 1 à 6, **caractérisé en ce que** la surface du piston (50) tournée vers le disque de réaction (34) présente une surépaisseur (64) tout au moins approximativement en forme de segment sphérique.
